# FASCICULE DE BREVET EUROPEEN

(11) **EP 3 260 021 B1**
(45) Date de publication et mention de la délivrance du brevet: **06.03.2019**
(21) Numéro de dépôt: 17177665.1
(22) Date de dépôt: 23.06.2017
(51) Int. Cl.: A47G 19/12, A01G 25/14, A47G 19/23, B65D 43/16

(54) **RÉCIPIENT VERSEUR ET EMPILEMENT DE PLUSIEURS RÉCIPIENTS VERSEURS**
AUSGUSSBEHÄLTER UND STAPEL VON MEHREREN AUSGUSSBEHÄLTERN
SPOUT CONTAINER AND STACK OF SEVERAL SPOUT CONTAINERS

(30) Priorité: 24.06.2016 FR 1655920
(43) Date de publication de la demande: 27.12.2017
(73) Titulaire: Etablissements Georges David, 01100 Oyonnax (FR)
(72) Inventeur: DAVID, Hervé, 01100 Oyonnax (FR)
(74) Mandataire: Lavoix

(56) Documents cités:
- WO-A1-2006/056788
- US-A- 1 623 107

## Description

La présente invention concerne un récipient verseur, du genre arrosoir ou carafe, ainsi qu'un empilement de plusieurs récipients verseurs.

WO-A1-2006/056788 décrit un arrosoir pliant et empilable, en matière plastique injectée. Cet arrosoir comprend une ouverture supérieure, ainsi qu'un bec verseur pourvu, à son extrémité, d'une pomme de diffusion amovible. L'ouverture supérieure est dotée de deux volets supérieurs articulés chacun autour d'une ligne de pliage, de façon à pouvoir être orientés dans une configuration ouverte, pour permettre l'empilement de deux arrosoirs l'un dans l'autre, et une configuration fermée d'utilisation de l'arrosoir. Chaque volet comporte un bord libre pourvu d'un système de connexion étanche à l'autre volet, du genre languette et rainure, pour obturer partiellement l'ouverture supérieure et conférer une forme tubulaire au bec verseur de l'arrosoir. L'arrosoir comprend également deux anses rapportées respectivement sur chacun des deux volets. Les deux anses peuvent être encliquetées ensemble et attachées à un crochet arrière du réservoir, lorsque les volets sont en configuration fermée, afin de former ensemble une anse unique.

Cet arrosoir connu présente plusieurs inconvénients. En configuration fermée, les volets peuvent ne pas présenter une rigidité suffisante pour permettre le transport d'un volume important d'eau avec l'arrosoir, notamment après une usure des lignes de pliage. En configuration ouverte, les volets peuvent ne pas adopter une orientation satisfaisante, ce qui peut compliquer l'empilement des arrosoirs. De plus, les volets déconnectés l'un de l'autre peuvent battre de façon libre, notamment sous l'effet d'efforts extérieurs tels que la gravité, ou lors de déplacements de l'arrosoir. Par conséquent, l'arrosoir est susceptible d'occuper un volume important et non maîtrisé, qui dépend de l'orientation effective de chaque volet. En particulier, lorsque les arrosoirs sont empilés, les paires de volets, qui ne peuvent être maintenues toutes à la fois dans une position adéquate par une seule personne transportant l'empilement, sont susceptibles d'adopter des orientations aléatoires et désordonnées.

Par conséquent, l'invention vise à porter remède aux inconvénients de l'art antérieur en proposant un nouveau récipient verseur qui est particulièrement compact, résistant, facile à utiliser, tout en pouvant être considéré comme esthétique. Un récipient verseur selon le préambule de la revendication 1 est connu du document US 1 623 107 A.

L'invention a pour objet un récipient verseur, notamment du genre arrosoir ou carafe, comprenant :
- un réservoir, qui définit une ouverture supérieure et un volume intérieur accessible par l'intermédiaire de l'ouverture supérieure,
- un bec verseur, qui fait saillie du réservoir en étant fluidiquement connecté au volume intérieur,
- deux volets, qui sont disposés à l'opposé l'un de l'autre par rapport à l'ouverture supérieure, et
- deux liaisons de pivotement principales, chaque liaison de pivotement principale liant l'un des volets au réservoir de façon pivotante, les volets évoluant ainsi entre :
   ∘ une configuration de fermeture, au moins partielle, de l'ouverture supérieure, dans laquelle les volets sont en contact l'un avec l'autre, et
   ∘ une configuration d'ouverture de l'ouverture supérieure, dans laquelle les volets sont à l'écart l'un de l'autre.

Selon l'invention, le récipient verseur comprend en outre au moins un élément pliant, qui est distinct des liaisons de pivotement principales, chaque élément pliant reliant au moins l'un des volets au réservoir, de façon à ce que chaque volet soit relié au réservoir par au moins un élément pliant, chaque élément pliant évoluant entre :
- une configuration pliée, lorsque le volet lié à cet élément pliant est en configuration de fermeture, et
- une configuration étendue, lorsque le volet lié à cet élément pliant est amené en configuration d'ouverture,

En outre, chaque élément pliant borne le pivotement du volet auquel il est lié, de la configuration pliée vers la configuration d'ouverture.

Grâce à l'invention, au moins un élément pliant stabilise le pivotement des volets par rapport au réservoir, en formant un lien mécanique entre les volets et le réservoir. De plus, chaque élément pliant confère un caractère particulièrement rigide au récipient verseur, notamment aux volets, notamment à la manière d'une nervure. Par conséquent, le récipient verseur de l'invention permet de transporter une quantité relativement importante de liquide sans ployer, notamment en configuration de fermeture. De plus, le pivotement des volets est borné à un secteur angulaire maximal par le ou les éléments pliants, de façon à garantir la compacité du récipient verseur en configuration d'ouverture. Le pivotement des volets étant borné à une orientation prédéterminée en configuration d'ouverture, la manipulation du récipient verseur par un utilisateur est facilitée, dans la mesure où cet utilisateur n'a pas besoin de maintenir les volets dans une orientation particulière, notamment pour déplacer le récipient verseur. Cette maîtrise de l'orientation des volets par les éléments pliants confère en outre un aspect fini au récipient verseur, ce qui peut être considéré comme particulièrement esthétique et/ou comme gage de bonne facture par un utilisateur.

Selon d'autres caractéristiques avantageuses de l'invention, prises isolément ou en combinaison :
- chaque élément pliant comprend :
   ∘ une aile primaire, ainsi qu'une première liaison de pivotement secondaire par l'intermédiaire de laquelle l'aile primaire est liée de façon pivotante au réservoir,
   ∘ au moins une aile secondaire, ainsi qu'une deuxième liaison de pivotement secondaire par l'intermédiaire de laquelle l'aile secondaire est liée de façon pivotante à l'un des volets, et
   ∘ une troisième liaison de pivotement secondaire par l'intermédiaire de laquelle l'aile primaire est liée de façon pivotante à l'aile secondaire, l'aile primaire et l'aile secondaire étant sensiblement dans le prolongement l'une de l'autre en configuration étendue, et étant obliques l'une par rapport à l'autre autour de la troisième liaison de pivotement secondaire en configuration pliée.
- le réservoir comprend une paroi avant, à partir de laquelle le bec verseur fait saillie, ainsi qu'une paroi arrière, qui est opposée à la paroi avant et qui délimite en partie, avec la paroi avant, le volume intérieur du réservoir, alors que chaque élément pliant est lié à au moins l'un des deux volets, et soit à la paroi avant, soit à la paroi arrière.
- trois éléments pliants sont prévus, dont deux éléments pliants avant, qui relient chacun l'un des volets à la paroi avant, et un élément pliant arrière, qui relie les deux volets à la paroi arrière.
- le réservoir comprend deux parois latérales délimitant en partie le volume intérieur, alors que les parois latérales présentent chacune un bord latéral entourant en partie l'ouverture supérieure, que chaque liaison de pivotement principale est prévue au niveau de l'un des bords latéraux, et que la géométrie de chaque élément pliant est choisie pour que, en configuration d'ouverture, chaque volet soit orienté dans le prolongement de la paroi latérale à laquelle ce volet est lié.
- le réservoir comprend un fond, par l'intermédiaire duquel les parois du réservoir sont reliées entre elles, à l'opposé de l'ouverture supérieure, alors que les parois sont orientées l'une par rapport à l'autre de façon divergente à partir du fond, en direction de l'ouverture supérieure.
- chaque liaison de pivotement du récipient verseur est formée par un trait de pliage.
- chaque volet comprend :
   ∘ une partie de base par l'intermédiaire de laquelle ce volet est lié à la liaison de pivotement principale, ainsi qu'à au moins certains des éléments pliants, et
   ∘ une partie extrémale, qui prolonge la partie de base à l'opposé de la liaison de pivotement principale à laquelle ce volet est lié, la partie extrémale s'étendant de façon oblique par rapport à la partie de base, les parties extrémales des volets venant en appui, de préférence en appui plan, l'une contre l'autre, en configuration de fermeture.
- le récipient verseur comprend un système d'encliquetage des volets par l'intermédiaire duquel les volets peuvent être maintenus en configuration de fermeture.

L'invention a également pour objet un empilement de plusieurs récipients verseurs, comprenant au moins un premier récipient verseur et un deuxième récipient verseur tels que définis ci-avant, le premier récipient verseur étant empilé sur le deuxième récipient verseur, le réservoir du deuxième récipient verseur recevant le premier récipient verseur par l'intermédiaire de l'ouverture supérieure du deuxième récipient verseur, les volets du deuxième récipient verseur autorisant l'empilement en configuration d'ouverture et interdisant l'empilement en configuration de fermeture.

L'invention sera mieux comprise à la lecture de la description qui va suivre, donnée uniquement à titre d'exemple non limitatif et non exhaustif et faite en se référant aux dessins dans lesquels :
- Les figures 1 à 3 sont des vues en perspective, selon différentes orientations, d'un récipient verseur conforme à l'invention, dont deux volets sont en configuration de fermeture ;
- Les figures 4 et 5 sont des vues en perspective, selon différentes orientations, du récipient verseur des figures 1 à 3, dont les deux volets sont en configuration d'ouverture ;
- La figure 6 est une vue en perspective, à plus grande échelle, d'un détail IV de la figure 5 ; et
- La figure 7 est une vue en perspective d'un empilement de deux récipients verseurs similaires à celui des figures 1 à 6.

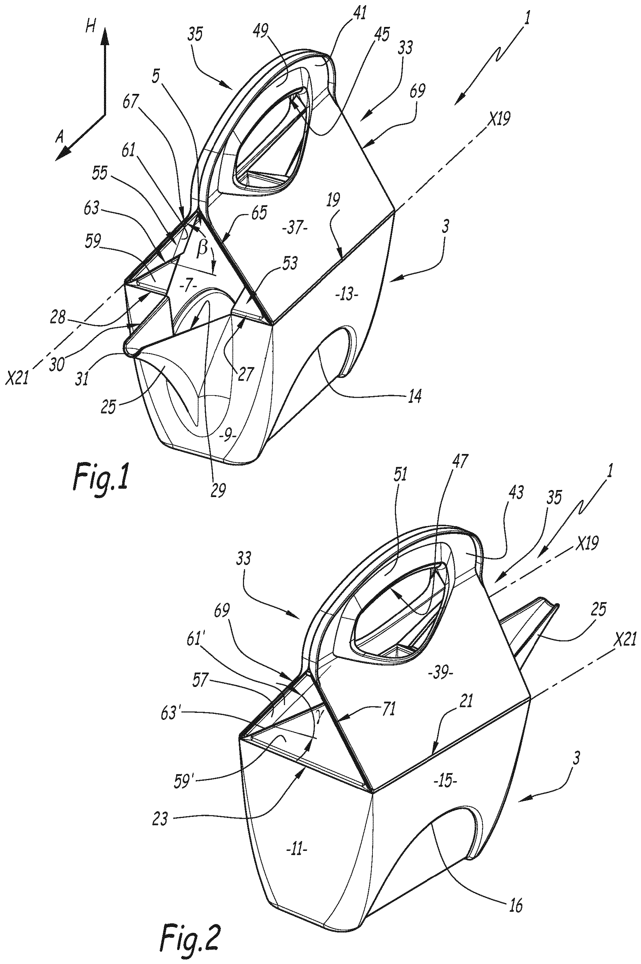

Dans ce qui suit, les expressions telles que « haut » et « supérieur » désignent une direction orientée dans le sens d'une flèche H représentée sur la figure 1, les expressions telles que « bas » et « inférieur » désignant une direction de sens opposé. On définit également une direction « avant », représentée par la flèche A sur la figure 1.

L'expression « récipient verseur » désigne un objet qui est conçu pour contenir un liquide tout en comprenant des moyens, du genre bec verseur, pour verser ce liquide par inclinaison du récipient. Dans l'exemple préférentiel des figures 1 à 6, le récipient verseur forme un arrosoir 1.

Cet arrosoir 1 est préférentiellement réalisé d'un seul tenant, formant ainsi une seule pièce, par exemple obtenue à l'aide d'une opération de moulage ou d'injection. L'arrosoir 1 forme par exemple une seule pièce en polypropylène, ou tout autre matériau plastique adapté. Les différents composants de l'arrosoir 1 décrits ci-après, en particulier ses parois, son fond, son bec verseur, et ses volets, sont des pièces d'épaisseur sensiblement constante, ou présentant des différences d'épaisseur faibles, du fait de ce mode de fabrication particulier.

L'arrosoir 1 des figures 1 à 6 comprend un réservoir 3, qui définit une ouverture supérieure 5 et un volume intérieur 7, qui est accessible par l'intermédiaire de l'ouverture supérieure 5. Le réservoir 3 est conçu pour contenir un liquide, tel que de l'eau, bien que d'autres types de liquide similaires puissent être contenus dans ce réservoir 3. L'arrosoir 1 est notamment destiné à un usage domestique ou agricole, pour arroser ou irriguer des plantations végétales, de type plante ou arbuste, à l'aide du liquide contenu dans le réservoir 3.

Le réservoir 3 comprend, comme visible sur la figure 1, une paroi avant 9 et une première paroi latérale 13, et, comme visible sur la figure 2, une paroi arrière 11 et une deuxième paroi latérale 15. La paroi arrière 11 est reliée à la paroi avant 9 par l'intermédiaire des parois latérales 13 et 15, de sorte que les parois 9, 11, 13 et 15 entourent l'ouverture supérieure 5.

Les parois latérales 13 et 15 sont respectivement pourvues de nervures 14 et 16 qui, tout en conférant une bonne rigidité aux parois latérales 13 et 15, confèrent un aspect esthétique général à l'arrosoir 1. Chaque nervure 14 et 16 présente avantageusement une forme courbe ou parabolique, dont la concavité est dirigée vers le bas. Chaque nervure 14 et 16 relie un premier coin inférieur de la paroi latérale 13 ou 15 concernée, situé à proximité de la paroi avant 9 et du fond 17, à un deuxième coin inférieur de la paroi latérale 13 ou 15 concerné, situé à proximité de la paroi arrière 11 et du fond 17, tout en passant par une zone centrale de la paroi latérale 13 ou 15 concernée.

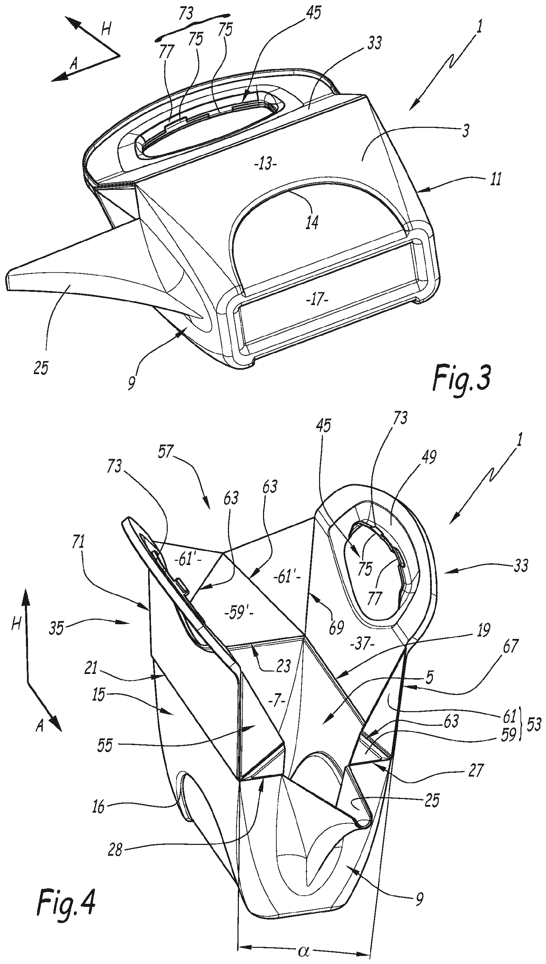

Comme visible sur la figure 3, le réservoir 3 comprend également un fond 17, formant une partie inférieure de l'arrosoir 1 par l'intermédiaire de laquelle les parois 9, 11, 13 et 15 sont reliées entre elles. Le fond 17 est disposé à l'opposé de l'ouverture supérieure 5. Les parois 9, 11, 13 et 15 ainsi que le fond 17 délimitent le volume intérieur 7 de l'arrosoir 1. Le fond 17 présente préférentiellement une forme plane, ou pour le moins permettant de déposer l'arrosoir 1 sur une surface plane et horizontale telle que le sol ou une table. Dans le présent exemple, le fond 17 présente un périmètre nervuré pour renforcer sa rigidité.

Les parois 9, 11, 13 et 15 sont orientées l'une par rapport à l'autre de façon divergente à partir du fond 17, en direction de l'ouverture supérieure 5. En d'autres termes, les parois 9, 11, 13 et 15, ainsi que préférentiellement l'ensemble de l'arrosoir 1, présentent une forme en dépouille de façon à pouvoir être facilement réalisé par moulage ou injection. La valeur de l'angle de dépouille minimale est par exemple comprise entre 2° et 5°, préférentiellement 3°, et dépend des contraintes liées à la fabrication de l'arrosoir 1.

Comme visible sur les figures 1 et 2, le contour de l'ouverture supérieure 5 est défini par des bords latéraux 19 et 21, appartenant respectivement aux parois latérales 13 et 15, ainsi que par un bord arrière 23 de la paroi arrière 11, reliant les bords latéraux 19 et 21 entre eux. Dans le présent exemple, les bords 19, 21 sont parallèles et s'étendent dans un même plan avec le bord 23, parallèlement au fond 17. Les bords 19, 21 et 23 sont rectilignes et décrivent un rectangle.

Par ailleurs, la paroi avant 9 présente un segment 27 de bord avant, prolongeant le bord latéral 19, ainsi qu'un deuxième segment 28 de bord avant prolongeant le bord latéral 21, pour délimiter le contour de l'ouverture supérieure 5 avec les autres bords 19, 21 et 23. Les deux segments 27 et 28 sont préférentiellement sensiblement coaxiaux, tout en étant perpendiculaires aux bords 19 et 21.

L'arrosoir 1 comprend un bec verseur 25, lequel fait saillie de la paroi avant 9 du réservoir 3 dans la direction avant A, entre les deux segments 27 et 28. Dans le présent exemple, le bec verseur 25 est ouvert en partie supérieure, de façon à former un canal séparant les segments 27 et 28, à section en U ou en V décroissante en s'éloignant de la paroi avant 9. Le bec verseur 25 prolonge ainsi l'ouverture supérieure 5 dans la direction avant A. Plus précisément, le bec verseur 25 comprend deux bords de bec 29 et 30, prolongeant respectivement les segments 27 et 28, tout en étant dirigés dans une direction proche de la direction avant A. Les bords 29 et 30 convergent légèrement l'un en direction de l'autre, dans le sens de la direction avant A et sont légèrement inclinés vers le haut par rapport au plan de l'ouverture supérieure 5. Le bec verseur 25 comprend une extrémité ouverte avec un bord en U reliant les bords 29 et 30.

Le bec verseur 25 est fluidiquement connecté au volume intérieur 7 du réservoir 3, c'est-à-dire qu'il communique avec ce dernier de façon à autoriser une propagation du liquide contenu dans le réservoir jusqu'au bec verseur 25, notamment lorsque l'arrosoir 1 est incliné vers l'avant par rapport à un plan horizontal, le liquide contenu dans le réservoir 3 étant alors dirigé, notamment par gravité, contre la paroi avant 9 de façon à s'engouffrer au travers du bec verseur 25. Le liquide s'échappe alors de l'arrosoir 1 par l'intermédiaire de l'extrémité ouverte 31 dans la direction avant A.

En variante non illustrée, le bec verseur 25 forme un conduit dont une section transversale forme un contour fermé, et non pas ouvert comme cela apparaît sur les figures. Dans cette variante, la paroi avant 9 présente un bord avant continu, les segments 27 et 28 étant reliés l'un à l'autre par un troisième segment non illustré. La paroi avant 9 est alors percée d'un orifice de mise en communication fluidique du volume intérieur 7 avec le bec verseur 25.

Par ailleurs, l'arrosoir 1 comprend deux volets 33 et 35, visibles respectivement sur les figures 1 et 2.

Le volet 33 est lié à la paroi latérale 13 par l'intermédiaire du bord latéral 19, lequel forme un trait de pliage. Le trait de pliage constitue une liaison de pivotement, dite « liaison de pivotement principale », liant le volet 33 au réservoir 3 de façon pivotante autour d'un axe X19 qui est colinéaire avec le bord latéral 19, tel qu'illustré sur la figure 1. De la même façon, le volet 35 est lié à la paroi latérale 15 par l'intermédiaire du bord latéral 21, lequel forme un trait de pliage. Le trait de pliage constitue une charnière ou liaison de pivotement principale, liant le volet 35 au réservoir 3 de façon pivotante autour d'un axe X21 qui est colinéaire avec le bord latéral 21 et donc parallèle à l'axe X19. Les deux volets 33 et 35 sont donc disposés à l'opposé l'un de l'autre par rapport à l'ouverture supérieure 5, tout en surplombant cette dernière ainsi que le volume intérieur 7.

Les traits de pliage permettent de réaliser des volets 33 et 35 d'un seul tenant avec le réservoir 3. Toutefois, d'autres types de liaisons de pivotement principales peuvent être mis en oeuvre, notamment dans le cas où les volets 33 et 35 forment des pièces rapportées sur le réservoir 3. En tout état de cause, chaque liaison de pivotement principale est prévue au niveau de l'un des bords latéraux 19 ou 21. Dans ce qui suit, tout trait de pliage peut être remplacé par une liaison de pivotement d'un autre type, par exemple une charnière avec des gonds, choisie en fonction de l'application.

Les volets 33 et 35 comprennent chacun une partie de base 37, respectivement 39, plane et visible aux figures 1 et 2, par l'intermédiaire de laquelle chaque volet est lié à l'un des bords latéraux 19 et 21, respectivement.

Les volets 33 et 35 comprennent respectivement des parties extrémales 41 et 43, visibles respectivement sur les figures 1 et 2. Les parties extrémales 41 et 43 prolongent respectivement les parties de base 37 et 39, à l'opposé des bords latéraux 19 et 21. Les parties extrémales 41 et 43 s'étendent dans des plans d'extension qui sont obliques par rapport aux plans d'extension dans lesquels s'étendent respectivement les parties de base 37 et 39.

Les parties de base 37 et 39 des volets 33 et 35 sont de forme générale rectangulaire, en étant délimitée respectivement par un bord avant 65 et 67, ainsi qu'un bord arrière 69 et 71. Les bords avant 65 et 67 sont respectivement parallèles aux bords arrières 69 et 71.

Grâce aux traits de pliage 19 et 21, les volets 33 et 35 peuvent évoluer entre une configuration de fermeture, au moins partielle, de l'ouverture supérieure 5, telle qu'illustrée aux figures 1 à 3, et une configuration d'ouverture de l'ouverture supérieure 5, telle qu'illustrée aux figures 4 à 7.

En configuration de fermeture des volets 33 et 35, les parties extrémales 41 et 43 viennent en appui, de préférence en appui plan, l'une contre l'autre. Les parties extrémales 41 et 43 étant en contact l'une contre l'autre, les parties de base 37 et 39 viennent bord à bord l'une contre l'autre pour former une coiffe, ou un toit, au-dessus de l'ouverture supérieure 5. En projection dans un plan orthogonal à la direction avant A, les parties de base 37 et 39 forment un triangle isocèle avec le bord 23. Par conséquent, l'ouverture supérieure 5 est partiellement obturée par les deux volets 33 et 35.

En configuration d'ouverture, les volets 33 et 35, en particulier leurs parties extrémales 41 et 43, sont à l'écart l'un de l'autre, afin de libérer l'accès au volume intérieur 7 via l'ouverture supérieure 5. Dans cette configuration d'ouverture, les parties de base 37 et 39 sont respectivement orientées dans le prolongement des parois 13 et 15, ou pour le moins selon une direction parallèle à celle des parois 13 et 15. En variante, d'autres orientations peuvent être prévues, afin d'adapter le degré d'ouverture de l'ouverture supérieure 5 en fonction de l'application.

De préférence, en configuration de fermeture, les parties de base 37 et 39 sont chacune orientées, par rapport à un plan orthogonal au fond 17, avec un angle compris entre 30° (degrés) et 60°, préférentiellement 45°.

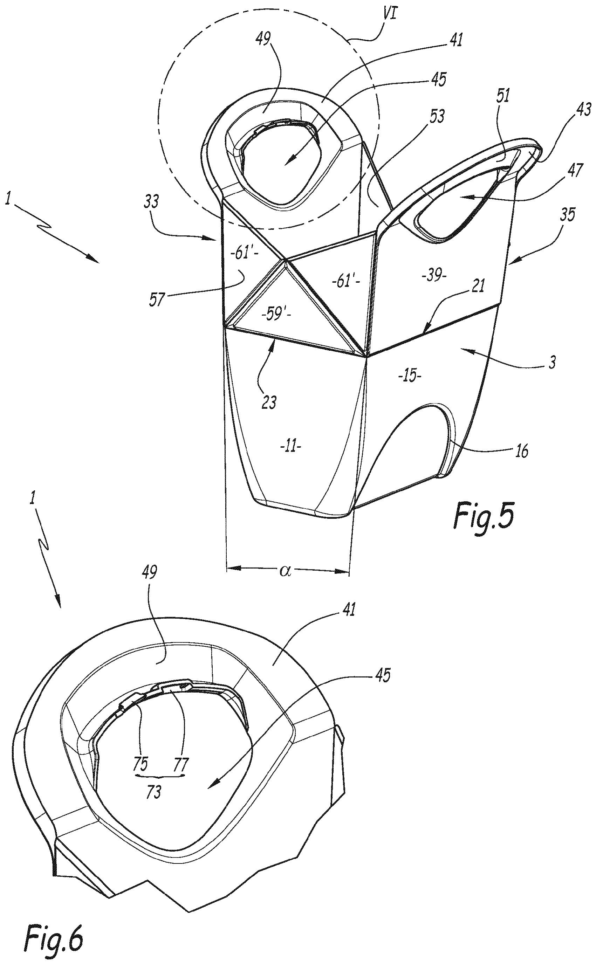

De préférence, en configuration d'ouverture, les parties de base 37 et 39 sont chacune orientées, par rapport au plan qui est orthogonal au fond 17, avec un angle compris entre -5° et -2°, préférentiellement 3°, ce qui correspond à l'angle de dépouille de l'arrosoir 1. Ainsi, les parties de base 37 et 39 sont orientées l'une par rapport à l'autre avec un angle α (alpha), représenté sur les figures 4 et 5, compris entre 4° et 10°, de préférence égal à environ 6°.

De préférence, entre la configuration de fermeture et la configuration d'ouverture, les volets 33 et 35 décrivent chacun un secteur angulaire compris entre environ 32° et 65°, préférentiellement 48°, autour de leur axe de pivotement X19 ou X21 respectif.

Des fenêtres 45 et 47 sont respectivement ménagées au travers des volets 33 et 35, en particulier à la fois au travers de la partie de base 37 ou 39 et de la partie extrémale 41 ou 43 de chacun des volets 33 et 35. Les fenêtres 45 et 47 présentent chacune un contour fermé délimité par un bord relevé 49 ou 51, respectivement, chaque bord relevé 49 et 51 présentant une inclinaison par rapport aux plans d'extension des parties de base 37 et 39 et des parties extrémales 41 et 43, de façon à rigidifier respectivement les volets 33 et 35. Ainsi, chaque volet 33 et 35 forme un élément rigide de l'arrosoir 1. Comme cela apparaît sur les figures 1 et 2, les fenêtres 45 et 47 se trouvent superposées, c'est-à-dire dans l'alignement l'une de l'autre selon une direction perpendiculaire aux axes X19 et X21, en configuration de fermeture de l'arrosoir 1, de façon à former ensemble une anse de l'arrosoir 1, par l'intermédiaire de laquelle un utilisateur peut manipuler ce dernier. Ce mode de réalisation de l'anse de l'arrosoir 1 évite avantageusement de prévoir une anse rapportée, tout en permettant d'obtenir une anse relativement rigide et fiable.

Une anse rapportée peut néanmoins être prévue.

En variante, le contour des fenêtres 45 et 47 est ouvert.

Afin de sécuriser la mise en configuration de fermeture des volets 33 et 35 et d'améliorer la rigidité de l'arrosoir 1 dans cette configuration, l'arrosoir 1 comprend avantageusement un système d'encliquetage 73, dont une partie est visible sur la figure 6. Les volets 33 et 35 peuvent être maintenus en configuration de fermeture grâce à ce système d'encliquetage 73. Le système d'encliquetage 73 doit être désencliqueté pour faire passer les volets 33 et 35 de la configuration de fermeture jusqu'à la configuration d'ouverture. Comme illustré sur la figure 6, le système d'encliquetage comprend deux paires de crochets complémentaires, incluant un crochet mâle 75 et un crochet femelle 77, chaque paire de crochets étant solidaire de l'une des fenêtres 45 ou 47. En configuration de fermeture, le crochet 75 de la fenêtre 45 s'encliquète avec le crochet 77 de la fenêtre 47, et le crochet 77 de la fenêtre 45 s'encliquète avec le crochet 75 de la fenêtre 47. Alternativement, tout autre système d'encliquetage adapté peut être prévu pour les volets 33 et 35.

L'arrosoir 1 comprend deux éléments pliants avant 53 et 55, qui relient respectivement les volets 33 et 35 à la paroi avant 9, comme visible sur les figures 1 et 4, ainsi qu'un élément pliant arrière 57, qui relie les deux volets 33 et 35 à la paroi arrière 11, comme visible sur les figures 2, 4 et 5. Les éléments pliants 53, 55 et 57 sont disposés entre les volets 33 et 35. Les éléments pliants avant 53 et 55 sont dirigés l'un vers l'autre, en étant disposés de part et d'autre du bec verseur 25.

Chaque élément pliant avant 53 et 55 comprend une aile primaire 59 et une aile secondaire 61 pliables l'une par rapport à l'autre, autour d'un trait de pliage 63. Le trait de pliage 63 forme une liaison de pivotement, dite « secondaire », par l'intermédiaire de laquelle l'aile primaire 59 est liée de façon pivotante à l'aile secondaire 61. Chaque aile 59 et 61 forme préférentiellement un triangle sensiblement plan. Le trait de pliage 63 s'étend sur toute la longueur de l'un des côté de chacun de ces triangles, en prolongeant le trait de pliage de l'un des bords latéraux 19 et 21 vers l'intérieur de l'arrosoir 1.

Chaque aile primaire 59 est liée au réservoir 3 de façon pivotante. L'aile primaire 59 de l'élément pliant 53 est liée au segment 27, qui forme un trait de pliage de l'aile primaire 59 par rapport au réservoir 3. L'aile primaire 59 de l'élément pliant 55 est liée au segment 28, qui forme un trait de pliage de l'aile primaire 59 par rapport au réservoir 3. En d'autres termes, les segments 27 et 28 sont également des liaisons de pivotement. Les traits de pliage respectifs des segments 27 et 28 s'étendent chacun sur toute la longueur d'un côté du triangle formant l'aile primaire 59 concernée. En d'autres termes, le côté de chaque aile primaire 59 s'étend sur toute la longueur du segment 27 ou 28 concerné.

L'aile secondaire 61 de l'élément pliant 53 est liée au bord avant 65 du volet 33, qui forme un trait de pliage de l'aile secondaire 61 par rapport à ce volet 33. L'aile secondaire 61 de l'élément pliant 55 est liée à au bord avant 67 du volet 35, qui forme un trait de pliage de l'aile secondaire 61 par rapport à ce volet 35. En d'autres termes, dans le présent exemple, les bords avant 65 et 67 sont également des liaisons de pivotement secondaires. Les traits de pliage respectifs de chacun des bords avant 65 et 67 s'étendent chacun sur toute la longueur d'un côté du triangle formant l'aile secondaire 61 concernée.

Comme visible aux figures 2, 4 et 5, l'élément pliant arrière 57 comprend une aile primaire 59' et deux ailes secondaires 61', lesquelles sont toutes deux pliables par rapport à l'aile primaire 59', autour de traits de pliage 63'. Chacun des deux traits de pliage 63' de l'élément 57 forme une liaison de pivotement secondaire par l'intermédiaire de laquelle l'un des ailes primaire 59' est liée de façon pivotante à l'aile secondaire 61'. Chaque aile 59' et 61' forme préférentiellement un triangle sensiblement plan. Chaque trait de pliage 63' s'étend sur toute la longueur de l'un des côté de deux de ces trois triangles. Les traits de pliage 63' sont sécants à une première extrémité, et prolongent chacun, à une deuxième extrémité, l'un des bords latéraux 19 et 21 vers l'intérieur de l'arrosoir 1.

L'aile primaire 59' de l'élément pliant arrière 57 est liée au réservoir 3 de façon pivotante, via un trait de pliage formé au niveau du bord 23. Dans le présent exemple, le bord 23 est donc également une liaison de pivotement secondaire et s'étend sur toute la longueur d'un côté du triangle formant l'aile primaire 59' de l'élément pliant arrière 57. En d'autres termes, le côté de l'aile primaire 59' de l'élément 57 s'étend sur toute la longueur du bord 23.

Les ailes secondaires 61' de l'élément pliant 57 sont liées respectivement aux bords arrière 69 et 71 des volets 33 et 35, qui forment chacun un trait de pliage de l'une des ailes secondaires 61' par rapport au volet 33 ou 35 adjacent. En d'autres termes, dans le présent exemple, les bords arrière 69 et 71 sont également des liaisons de pivotement. Les traits de pliage respectifs de chacun des bords arrière 69 et 71 s'étendent chacun sur toute la longueur d'un côté du triangle de l'aile secondaire 61' concernée.

A la manière de soufflets, chaque élément pliant 53, 55 et 57 évolue ainsi entre une configuration pliée, représentée aux figures 1 à 3, lorsque le ou les volets 33 et/ou 35 concernés sont en configuration de fermeture, et une configuration étendue, représentée aux figures 4 et 5, lorsque le ou les volets 33 et/ou 35 sont amenés en configuration d'ouverture.

Dans la configuration pliée, c'est-à-dire escamotée, les éléments pliants 53, 55 et 57 obturent partiellement, avec les volets 33 et 35, l'ouverture supérieure 5, en recouvrant cette dernière. Dans leur configuration pliée, chaque aile primaire 59 et son aile secondaire 61 adjacente sont obliques l'une par rapport à l'autre, en étant rabattues l'une vers l'autre en formant un angle β (beta) compris entre 90° et 110°. De même, dans leur configuration pliée, chaque aile secondaire 61' est oblique par rapport à l'aile primaire 59', en étant rabattue vers cette dernière, en formant un angle γ (gamma) compris entre 90° et 110°. De préférence, les angles β et γ sont sensiblement égaux.

En particulier, en configuration pliée, l'élément pliant arrière 57 obture totalement le passage délimité par les bords arrière 23, 69 et 71. En configuration pliée, les éléments pliants avant 53 et 55 obturent partiellement le passage délimité par les bords avant 65 et 67 et par le bec verseur 25. En conséquence, le risque de renverser le contenu du volume intérieur 7 pendant le transport de l'arrosoir 1, alors que celui-ci est en configuration de fermeture, est réduit. Les éléments pliants 53, 55 et 57 restent peu onéreux, en pouvant être réalisés d'un seul tenant avec les autres éléments de l'arrosoir 1. De plus, la présence des éléments pliants 53, 55 et 57 rigidifie les volets 33 et 35.

Les éléments pliants 53, 55 et 57 sont contraints à se déployer dans la configuration étendue sous l'effet du pivotement des volets 33 et 35 vers la configuration d'ouverture. Lorsque les volets 33 et 35 sont pivotés jusqu'à la configuration d'ouverture, ils tirent sur les éléments pliants 53, 55 et 57, qui sont alors étendus de façon à empêcher mécaniquement les volets 33 et 35 de pivoter davantage. Le pivotement des volets 33 et 35 est donc borné par les éléments pliants 53, 55 et 57, lorsque les volets 33 et 35 sont pivotés de la configuration pliée vers la configuration d'ouverture, les volets 33 et 35 ne pouvant être plus ouverts que la configuration d'ouverture. En pratique, en configuration étendue, les ailes primaires 59 et secondaires 61 adjacentes, ainsi que l'aile primaire 59' et les ailes secondaires 61', s'étendent dans le prolongement l'une de l'autre, ou parallèlement l'une à l'autre. En configuration étendue, les éléments pliants avant 53 et 55 s'étendent parallèlement à la paroi avant 9, alors que l'élément pliant arrière 57 s'étend parallèlement à la paroi arrière 11.

Le pivotement des volets 33 et 35 est donc limité à un angle maximal, correspondant à celui de la configuration d'ouverture illustrée aux figures 4 et 5. La géométrie des éléments pliants 53, 55 et 57 est choisie pour que, en configuration d'ouverture, chaque volet 33 et 35 soit orienté dans le prolongement de la paroi latérale 13 ou 15 à laquelle ce volet est lié. Les éléments pliants 53, 55 et 57 empêchent mécaniquement les volets 33 et 35 de s'ouvrir davantage. Cela permet de limiter l'espace occupé par les volets 33 et 35 latéralement, tout en positionnant ces derniers de façon adéquate en configuration d'ouverture, pour permettre par exemple un remplissage aisé de l'arrosoir 1 avec un liquide et l'empilement de plusieurs arrosoirs, tel que décrit dans ce qui suit.

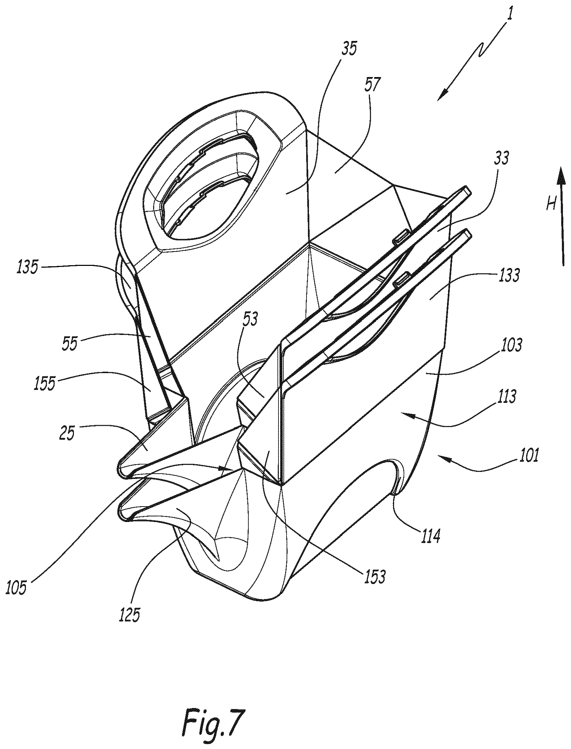

En configuration d'ouverture, le réservoir 3, les éléments pliants 53, 55 et 57, ainsi que les volets 33 et 35, sont en dépouille par rapport au fond 17, ce qui permet l'empilement de plusieurs arrosoirs similaires l'un sur l'autre selon la direction H, par emboîtement ou enchâssement d'un réservoir dans l'autre, comme illustré sur la figure 7.

En l'espèce, sur la figure 7, un premier arrosoir 1 conforme à ce qui précède est empilé sur un deuxième arrosoir 101 identique, les deux arrosoirs 1 et 101 étant en configuration d'ouverture. Dans le présent exemple, l'arrosoir 101 est identique à l'arrosoir 1, les caractéristiques de l'arrosoir 101 similaires à celles de l'arrosoir 1 étant référencées avec les mêmes signes augmentés de 100. En particulier, tout comme l'arrosoir 1, l'arrosoir 101 comprend un réservoir 103, qui délimite un volume intérieur, une ouverture supérieure 105, un bec verseur 125, des volets 133 et 135, une paroi avant 109, une paroi latérale 113 visible sur la figure 7, une paroi latérale, une paroi arrière et un fond non visibles sur la figure 7, des éléments pliants avant 153 et 155, ainsi qu'un élément pliant arrière, non visible sur la figure 7. Deux nervures sont prévues respectivement sur des parois latérales de l'arrosoir 101, une seule nervure 114 et une seule paroi latérale 113 étant visibles sur la figure 7.

Comme illustré sur la figure 7, le réservoir 103 du deuxième arrosoir 101 reçoit, en son volume intérieur, le réservoir 3 de l'arrosoir 1, par l'intermédiaire de l'ouverture supérieure 105 de l'arrosoir 101. Plus précisément, le bec verseur 125 reçoit le bec verseur 25 en son sein. De plus, les fonds, les parois, les volets et les éléments pliants des arrosoirs 1 et 101 sont disposés respectivement parallèlement les uns par rapport aux autres, à proximité les uns des autres, voire en contact les uns avec les autres. L'empilement des arrosoirs 1 et 101 est ainsi particulièrement compact. L'empilement est également relativement stable, l'orientation des volets 133 et 135, ainsi que celle des éléments pliants avant 153 et 155 et arrière de l'arrosoir 101, leur permettant d'épouser et maintenir respectivement les volets 33 et 35 et les éléments pliants 53, 55 et 57 de l'arrosoir 1.

La présence des nervures 14 et 16 de l'arrosoir 1 facilite et stabilise son positionnement au sein de l'arrosoir 101. En particulier, ces nervures 14 et 16 guident l'empilement de l'arrosoir 1 au sein du réservoir 103 de l'arrosoir 101, les nervures 14 et 16 étant respectivement guidées par la nervure 114 et par la nervure non visible sur la figure 7 de l'arrosoir 101. L'empilement des arrosoirs 1 et 101 est ainsi particulièrement aisé et stable, grâce à la présence de ces nervures de forme correspondante. La présence des nervures permet en outre de limiter l'enfoncement de l'arrosoir 1 dans l'arrosoir 101 par mise en appui de leurs nervures respectives, de façon à éviter un blocage de l'arrosoir 1 dans l'arrosoir 101.

Sur la figure 7, les volets 33 et 35 de l'arrosoir 1 sont représentés en configuration d'ouverture, mais pourraient être en configuration de fermeture sans entraver l'empilement de l'arrosoir 1 sur l'arrosoir 101. On comprend que les volets 133 et 135 doivent être placés en configuration d'ouverture pour autoriser l'empilement de l'arrosoir 1 sur l'arrosoir 101. En effet, l'obturation de l'ouverture supérieure 105 par les volets 133 et 135 s'oppose mécaniquement à l'introduction du réservoir 3 dans le réservoir 103 et interdit ainsi un tel empilement.

En variante non illustrée, l'arrosoir 1 peut comprendre des éléments pliants qui sont répartis différemment de l'exemple qui précède. Par exemple, l'arrosoir 1 peut comprendre un total de quatre éléments pliants similaires aux éléments pliants avant 53 et 55 définis ci-avant, chacun des quatre éléments pliants étant lié à l'un des bords avant 65 ou 67 ou à l'un des bords arrière 69 ou 71 des volets 33 et 35. De manière générale, chaque élément pliant de l'arrosoir 1 est lié d'une part à au moins l'un des deux volets 33 et/ou 35, et d'autre part soit à la paroi avant 9, soit à la paroi arrière 11. En tout état de cause, l'arrosoir comprend au moins un élément pliant, qui est distinct des liaisons de pivotement principales, formées par des traits de pliage dans l'exemple illustré, chaque élément pliant reliant au moins l'un des volets 33 ou 35 au réservoir 3, de façon à ce que chaque volet 33 et 35 soit relié au réservoir 3 par au moins l'un de ces éléments pliants.

Alternativement, le récipient verseur de l'invention ne forme pas un arrosoir, mais une carafe, notamment pour le service d'une boisson que son réservoir peut contenir. De manière générale, le récipient verseur permet de contenir et verser un liquide, quel que soit le domaine d'application.

Les caractéristiques techniques des modes de réalisation et des variantes décrits dans ce qui précède peuvent être implémentées dans les autres modes de réalisation et variantes décrits dans ce qui précède, pour autant que cela soit techniquement possible.

## Revendications

1. Récipient verseur (1), notamment du genre arrosoir ou carafe, comprenant :
- un réservoir (3), qui définit une ouverture supérieure (5) et un volume intérieur (7) accessible par l'intermédiaire de l'ouverture supérieure,
- un bec verseur (25), qui fait saillie du réservoir en étant fluidiquement connecté au volume intérieur,
- deux volets (33, 35), qui sont disposés à l'opposé l'un de l'autre par rapport à l'ouverture supérieure, et
- deux liaisons de pivotement principales (19, 21), chaque liaison de pivotement principale liant l'un des volets au réservoir de façon pivotante, les volets évoluant ainsi entre :
∘ une configuration de fermeture, au moins partielle, de l'ouverture supérieure, dans laquelle les volets sont en contact l'un avec l'autre, et
∘ une configuration d'ouverture de l'ouverture supérieure, dans laquelle les volets sont à l'écart l'un de l'autre,
le récipient verseur (1) étant **caractérisé en ce que** le récipient verseur (1) comprend en outre au moins un élément pliant (53, 55, 57), qui est distinct des liaisons de pivotement principales (19, 21), chaque élément pliant reliant au moins l'un des volets (33, 35) au réservoir (3), de façon à ce que chaque volet soit relié au réservoir par au moins un élément pliant, chaque élément pliant évoluant entre :
- une configuration pliée, lorsque le volet lié à cet élément pliant est en configuration de fermeture, et
- une configuration étendue, lorsque le volet lié à cet élément pliant est amené en configuration d'ouverture,
et **en ce que en ce que** chaque élément pliant (53, 55, 57) borne le pivotement du volet auquel il est lié, de la configuration pliée vers la configuration d'ouverture.

2. Récipient verseur (1) selon la revendication 1, **caractérisé en ce que** chaque élément pliant (53, 55, 57) comprend :
- une aile primaire (59, 59'), ainsi qu'une première liaison de pivotement secondaire (27, 28) par l'intermédiaire de laquelle l'aile primaire est liée de façon pivotante au réservoir (3),
- au moins une aile secondaire (61, 61'), ainsi qu'une deuxième liaison de pivotement secondaire (65, 67, 69, 71) par l'intermédiaire de laquelle l'aile secondaire est liée de façon pivotante à l'un des volets (33, 35), et
- une troisième liaison de pivotement secondaire (63, 63') par l'intermédiaire de laquelle l'aile primaire est liée de façon pivotante à l'aile secondaire, l'aile primaire et l'aile secondaire étant sensiblement dans le prolongement l'une de l'autre en configuration étendue, et étant obliques l'une par rapport à l'autre autour de la troisième liaison de pivotement secondaire en configuration pliée.

3. Récipient verseur (1) selon l'une quelconque des revendications précédentes, **caractérisé en ce que** :
- le réservoir (3) comprend une paroi avant (9), à partir de laquelle le bec verseur (25) fait saillie, ainsi qu'une paroi arrière (11), qui est opposée à la paroi avant et qui délimite en partie, avec la paroi avant, le volume intérieur (7) du réservoir, et
- chaque élément pliant (53, 55, 57) est lié à :
∘ au moins l'un des deux volets (33, 35), et
∘ soit à la paroi avant, soit à la paroi arrière.

4. Récipient verseur (1) selon la revendication 3, **caractérisé en ce que** trois éléments pliants (53, 55, 57) sont prévus, dont :
- deux éléments pliants avant (53, 55), qui relient chacun l'un des volets (33, 35) à la paroi avant (9), et
- un élément pliant arrière (57), qui relie les deux volets à la paroi arrière (11).

5. Récipient verseur (1) selon l'une quelconque des revendications précédentes, **caractérisé en ce que** :
- le réservoir (3) comprend deux parois latérales (13, 15) délimitant en partie le volume intérieur (7),
- les parois latérales présentent chacune un bord latéral (19, 21) entourant en partie l'ouverture supérieure (5),
- chaque liaison de pivotement principale (19, 21) est prévue au niveau de l'un des bords latéraux (19, 21), et
- la géométrie de chaque élément pliant (53, 55, 57) est choisie pour que, en configuration d'ouverture, chaque volet (33, 35) soit orienté dans le prolongement de la paroi latérale (13, 15) à laquelle ce volet est lié.

6. Récipient verseur (1) selon l'une quelconque des revendications 3 à 5, **caractérisé en ce que** :
- le réservoir (3) comprend un fond (17), par l'intermédiaire duquel les parois (9, 11, 13, 15) du réservoir sont reliées entre elles, à l'opposé de l'ouverture supérieure (5),
- les parois sont orientées l'une par rapport à l'autre de façon divergente à partir du fond, en direction de l'ouverture supérieure.

7. Récipient verseur (1) selon l'une quelconque des revendications précédentes, **caractérisé en ce que** chaque liaison de pivotement (19, 21, 23, 27, 28, 63, 65, 67, 69, 71) du récipient verseur est formée par un trait de pliage.

8. Récipient verseur (1) selon l'une quelconque des revendications précédentes, **caractérisé en ce que** chaque volet (33, 35) comprend :
- une partie de base (37, 39) par l'intermédiaire de laquelle ce volet est lié à la liaison de pivotement principale (19, 21), ainsi qu'à au moins certains des éléments pliants (53, 55, 57), et
- une partie extrémale (41, 43), qui prolonge la partie de base à l'opposé de la liaison de pivotement principale à laquelle ce volet est lié, la partie extrémale s'étendant de façon oblique par rapport à la partie de base, les parties extrémales des volets (33, 35) venant en appui, de préférence en appui plan, l'une contre l'autre, en configuration de fermeture.

9. Récipient verseur (1) selon l'une quelconque des revendications précédentes, **caractérisé en ce que** le récipient verseur (1) comprend un système d'encliquetage (73) des volets (33, 35) par l'intermédiaire duquel les volets peuvent être maintenus en configuration de fermeture.

10. Empilement de plusieurs récipients verseurs (1, 101), comprenant au moins un premier récipient verseur (1) et un deuxième récipient verseur (101) conformes à l'une quelconque des revendications précédentes, le premier récipient verseur (1) étant empilé sur le deuxième récipient verseur (101), le réservoir (103) du deuxième récipient verseur recevant le premier récipient verseur par l'intermédiaire de l'ouverture supérieure (105) du deuxième récipient verseur, les volets (133, 135) du deuxième récipient verseur autorisant l'empilement en configuration d'ouverture et interdisant l'empilement en configuration de fermeture.

## Patentansprüche

1. Ausgussbehälter (1), insbesondere vom Typ Gießkanne oder Karaffe, umfassend:
- ein Reservoir (3), das eine obere Öffnung (5) und ein Innenvolumen (7) definiert, das über die obere Öffnung zugänglich ist,
- einen Ausgussschnabel (25), der von dem Reservoir vorragt, wobei er fluidmäßig mit dem Innenvolumen verbunden ist,
- zwei Klappen (33, 35), die in Bezug auf die obere Öffnung einander gegenüberliegend angeordnet sind, und
- zwei Hauptschwenkverbindungen (19, 21), wobei jede Hauptschwenkverbindung eine der Klappen auf schwenkbare Weise mit dem Reservoir verbindet, wodurch die Klappen beweglich sind zwischen:
∘ einer Konfiguration des wenigstens teilweisen Verschlusses der oberen Öffnung, in der die Klappen in Kontakt miteinander sind, und
∘ einer Konfiguration des Öffnens der oberen Öffnung, in der die Klappen voneinander beabstandet sind,
wobei der Ausgussbehälter (1) **dadurch gekennzeichnet ist, dass** der Ausgussbehälter (1) darüber hinaus wenigstens ein Faltelement (53, 55, 57) umfasst, das sich von den Hauptschwenkverbindungen (19, 21) unterscheidet, wobei jedes Faltelement wenigstens eine der Klappen (33, 35) derart mit dem Reservoir (3) verbindet, dass jede Klappe durch wenigstens ein Faltelement mit dem Reservoir verbunden ist, wobei jedes Faltelement beweglich ist zwischen:
- einer gefalteten Konfiguration, wenn sich die mit diesem Faltelement verbundene Klappe in der Verschlusskonfiguration befindet, und
- einer ausgestreckten Konfiguration, wenn die mit diesem Faltelement verbundene Klappe in die Öffnungskonfiguration gebracht wurde,
und dass jedes Faltelement (53, 55, 57) das Schwenken der Klappe, mit dem es verbunden ist, von der gefalteten Konfiguration zur Öffnungskonfiguration einschränkt.

2. Ausgussbehälter (1) nach Anspruch 1, **dadurch gekennzeichnet, dass** jedes Faltelement (53, 55, 57) Folgendes umfasst:
- einen primären Flügel (59, 59') sowie eine erste Sekundärschwenkverbindung (27, 28), durch die der primäre Flügel auf schwenkbare Weise mit dem Reservoir (3) verbunden ist,
- wenigstens einen sekundären Flügel (61, 61') sowie eine zweite Sekundärschwenkverbindung (65, 67, 69, 71), durch die der sekundäre Flügel auf schwenkbare Weise mit einer der Klappen (33, 35) verbunden ist, und
- eine dritte Sekundärschwenkverbindung (63, 63'), durch die der primäre Flügel auf schwenkbare Weise mit dem sekundären Flügel verbunden ist, wobei sich der primäre Flügel und der sekundäre Flügel in der ausgestreckten Konfiguration im Wesentlichen in der Verlängerung zueinander befinden und in der gefalteten Konfiguration um die dritte Sekundärschwenkverbindung schräg zueinander angeordnet sind.

3. Ausgussbehälter (1) nach einem der vorhergehenden Ansprüche, **dadurch gekennzeichnet, dass**:
- das Reservoir (3) Folgendes umfasst: eine vordere Wand (9), von welcher der Ausgussschnabel (25) vorragt, sowie eine hintere Wand (11), die der vorderen Wand gegenüberliegt und teilweise mit der vorderen Wand das Innenvolumen (7) des Reservoirs begrenzt, und
- jedes Faltelement (53, 55, 57) verbunden ist mit:
∘ wenigstens einer der zwei Klappen (33, 35), und
∘ entweder mit der vorderen Wand oder mit der hinteren Wand.

4. Ausgussbehälter (1) nach Anspruch 3, **dadurch gekennzeichnet, dass** drei Faltelemente (53, 55, 57) vorgesehen sind, darunter:
- zwei vordere Faltelemente (53, 55), die jeweils eine der Klappen (33, 35) mit der vorderen Wand (9) verbinden, und
- ein hinteres Faltelement (57), das die zwei Klappen mit der hinteren Wand (11) verbindet.

5. Ausgussbehälter (1) nach einem der vorhergehenden Ansprüche, **dadurch gekennzeichnet, dass**:
- das Reservoir (3) zwei Seitenwände (13, 15) umfasst, die das Innenvolumen (7) teilweise begrenzen,
- die Seitenwände jeweils einen Seitenrand (19, 21) aufweisen, der die obere Öffnung (5) teilweise umgibt,
- jede Hauptschwenkverbindung (19, 21) im Bereich von einem der Seitenränder (19, 21) vorgesehen ist, und
- die Geometrie jedes Faltelements (53, 55, 57) derart gewählt ist, dass in der Öffnungskonfiguration jede Klappe (33, 35) in der Verlängerung der Seitenwand (13, 15) ausgerichtet ist, mit welcher diese Klappe verbunden ist.

6. Ausgussbehälter (1) nach einem der Ansprüche 3 bis 5, **dadurch gekennzeichnet, dass**:
- das Reservoir (3) gegenüber der oberen Öffnung (5) einen Boden (17) umfasst, durch den die Wände (9, 11, 13, 15) des Reservoirs miteinander verbunden sind,
- die Wände in Bezug zueinander derart ausgerichtet sind, dass sie ausgehend vom Boden in Richtung auf die obere Öffnung auseinanderlaufen.

7. Ausgussbehälter (1) nach einem der vorhergehenden Ansprüche, **dadurch gekennzeichnet, dass** jede Schwenkverbindung (19, 21, 23, 27, 28, 63, 65, 67, 69, 71) des Ausgussbehälters durch eine Faltlinie gebildet ist.

8. Ausgussbehälter (1) nach einem der vorhergehenden Ansprüche, **dadurch gekennzeichnet, dass** jede Klappe (33, 35) Folgendes umfasst:
- einen Basisteil (37, 39), durch den diese Klappe mit der Hauptschwenkverbindung (19, 21) sowie mit wenigstens einigen der Faltelemente (53, 55, 57) verbunden ist, und
- einen Endteil (41, 43), der den Basisteil gegenüber von der Hauptschwenkverbindung verlängert, mit dem diese Klappe verbunden ist, wobei sich der Endteil in Bezug auf den Basisteil auf schräge Weise erstreckt, wobei die Endteile der Klappen (33, 35) in der Verschlusskonfiguration aneinander anliegen, vorzugsweise flach aneinander anliegen.

9. Ausgussbehälter (1) nach einem der vorhergehenden Ansprüche, **dadurch gekennzeichnet, dass** der Ausgussbehälter (1) ein System zum Verrasten (73) der Klappen (33, 35) umfasst, durch das die Klappen in der Verschlusskonfiguration gehalten werden können.

10. Stapel von mehreren Ausgussbehältern (1, 101), umfassend wenigstens einen ersten Ausgussbehälter (1) und einen zweiten Ausgussbehälter (101) nach einem der vorhergehenden Ansprüche, wobei der erste Ausgussbehälter (1) auf den zweiten Ausgussbehälter (101) gestapelt ist, wobei das Reservoir (103) des zweiten Ausgussbehälters den ersten Ausgussbehälter durch die obere Öffnung (105) des zweiten Ausgussbehälters aufnimmt, wobei die Klappen (133, 135) des zweiten Ausgussbehälters das Stapeln in der Öffnungskonfiguration zulassen und das Stapeln in der Verschlusskonfiguration verbieten.

## Claims

1. Container with spout (1), especially of the watering can or jug type, comprising:
- a reservoir (3) which defines an upper opening (5) and an interior volume (7) accessible by way of the upper opening,
- a pouring spout (25) which protrudes from the reservoir while being fluidically connected to the interior volume,
- two flaps (33, 35) which are arranged opposite one another relative to the upper opening, and
- two main pivotal connections (19, 21), each main pivotal connection connecting one of the flaps to the reservoir in a pivoting manner, the flaps thus moving between:
∘ an at least partially closed configuration of the upper opening, in which the flaps are in contact with one another, and
∘ an open configuration of the upper opening, in which the flaps are spaced apart from one another,
the container with spout (1) being **characterized in that** the container with spout (1) further comprises at least one folding element (53, 55, 57) which is separate from the main pivotal connections (19, 21), each folding element connecting at least one of the flaps (33, 35) to the reservoir (3) in such a manner that each flap is connected to the reservoir by at least one folding element, each folding element moving between:
- a folded configuration, when the flap connected to that folding element is in the closed configuration, and
- an extended configuration, when the flap connected to that folding element is brought into the open configuration,
and **in that** each folding element (53, 55, 57) limits the pivoting of the flap to which it is connected, from the folded configuration to the open configuration.

2. Container with spout (1) according to claim 1, **characterised in that** each folding element (53, 55, 57) comprises:
- a primary wing (59, 59') as well as a first secondary pivotal connection (27, 28) by way of which the primary wing is connected in a pivoting manner to the reservoir (3),
- at least one secondary wing (61, 61') as well as a second secondary pivotal connection (65, 67, 69, 71) by way of which the secondary wing is connected in a pivoting manner to one of the flaps (33, 35), and
- a third secondary pivoting connection (63, 63') by way of which the primary wing is connected in a pivoting manner to the secondary wing, the primary wing and the secondary wing being substantially a continuation of one another in the extended configuration and being oblique relative to one another about the third secondary pivotal connection in the folded configuration.

3. Container with spout (1) according to any one of the preceding claims, **characterised in that**:
- the reservoir (3) comprises a front wall (9), from which the pouring spout (25) protrudes, as well as a rear wall (11) which is opposite the front wall and which delimits in part, with the front wall, the interior volume (7) of the reservoir, and
- each folding element (53, 55, 57) is connected to:
∘ at least one of the two flaps (33, 35), and
∘ either to the front wall or to the rear wall.

4. Container with spout (1) according to claim 3, **characterised in that** three folding elements (53, 55, 57) are provided, including:
- two front folding elements (53, 55), which each connect one of the flaps (33, 35) to the front wall (9), and
- a rear folding element (57), which connects the two flaps to the rear wall (11).

5. Container with spout (1) according to any one of the preceding claims, **characterised in that**:
- the reservoir (3) comprises two lateral walls (13, 15) delimiting in part the interior volume (7),
- the lateral walls each have a lateral edge (19, 21) surrounding in part the upper opening (5),
- each main pivotal connection (19, 21) is provided at one of the lateral edges (19, 21), and
- the geometry of each folding element (53, 55, 57) is chosen so that, in the open configuration, each flap (33, 35) is oriented as a continuation of the lateral wall (13, 15) to which that flap is connected.

6. Container with spout (1) according to any one of claims 3 to 5, **characterised in that**:
- the reservoir (3) comprises a bottom (17) by way of which the walls (9, 11, 13, 15) of the reservoir are connected to one another, opposite the upper opening (5),
- the walls are oriented relative to one another in a diverging manner starting from the bottom, in the direction towards the upper opening.

7. Container with spout (1) according to any one of the preceding claims, **characterised in that** each pivotal connection (19, 21, 23, 27, 28, 63, 65, 67, 69, 71) of the container with spout is formed by a fold line.

8. Container with spout (1) according to any one of the preceding claims, **characterised in that** each flap (33, 35) comprises:
- a base portion (37, 39) by way of which the flap is connected to the main pivotal connection (19, 21) as well as to at least some of the folding elements (53, 55, 57), and
- an extremal portion (41, 43) which extends the base portion opposite the main pivotal connection to which the flap is connected, the extremal portion extending obliquely relative to the base portion, the extremal portions of the flaps (33, 35) coming to bear, preferably bearing flat, against one another in the closed configuration.

9. Container with spout (1) according to any one of the preceding claims, **characterised in that** the container with spout (1) comprises a latching system (73) for the flaps (33, 35), by way of which the flaps can be maintained in the closed configuration.

10. Stack of a plurality of containers with spouts (1, 101), comprising at least a first container with spout (1) and a second container with spout (101) according to any one of the preceding claims, the first container with spout (1) being stacked on the second container with spout (101), the reservoir (103) of the second container with spout receiving the first container with spout by way of the upper opening (105) of the second container with spout, the flaps (133, 135) of the second container with spout permitting stacking in the open configuration and preventing stacking in the closed configuration.
